Europäisches Patentamt

European Patent Office

Office européen des brevets

(11) Publication number : **0 642 742 A1**

# (12) EUROPEAN PATENT APPLICATION

(21) Application number : **94305586.3**

(22) Date of filing : **28.07.94**

(51) Int. Cl.⁶ : **A23L 1/16**

(30) Priority : **13.08.93 US 106217**

(43) Date of publication of application :
**15.03.95 Bulletin 95/11**

(84) Designated Contracting States :
**AT BE CH DE DK ES FR GB GR IE IT LI LU MC NL PT SE**

(71) Applicant : **KRAFT GENERAL FOODS, INC.**
**250 North Street**
**White Plains New York 10625 (US)**

(72) Inventor : **Villota, Ricardo**
**1184 Thorndale Lane**
**Lake Zurich, Illinois 60047 (US)**
Inventor : **Irvin, Scot Alan**
**1139 Hummingbird Lane**
**Grayslake, Illinois 60030 (US)**
Inventor : **Maksimoski, Richard Charles**
**2027 Westfield Drive**
**Gurnee, Illinois 60031 (US)**

(74) Representative : **Eyles, Christopher Thomas**
**W.P. THOMPSON & CO.**
**Celcon House**
**289-293 High Holborn**
**London WC1V 7HU (GB)**

(54) Method for producing vegetable pasta.

(57) A method is provided for the production of vegetable pasta, especially thin-walled vegetable pasta, containing high levels of vegetable solids, i.e., about 4 to about 15 weight percent vegetable solids. Vegetable pasta can be prepared using vegetable solids derived from beet, broccoli, carrot, celery, corn, green pepper, spinach, tomato, and the like. Such a high level vegetable pasta is produced by carefully drying the formed pasta shapes under high temperature and low relative humidity conditions, whereby a vegetable pasta is obtained with a moisture content of about 11 to about 13 weight percent and vegetable solids content of about 4 to about 15 weight percent, wherein the vegetable pasta has, after processing and subsequent cooking, good color, texture, integrity, and vegetable flavor. The vegetable pasta produced by this method also has excellent storage stability.

EP 0 642 742 A1

## FIELD OF THE INVENTION

The present invention generally relates to a method for the production of vegetable pasta and to the vegetable pasta so produced. More specifically, this invention provides an improved method for the production of vegetable-containing pasta, especially thin-walled pasta, which contains high levels of vegetable solids. The vegetable pasta of this invention retains good color, texture, integrity, and vegetable flavor after cooking.

## BACKGROUND OF THE INVENTION

Conventional vegetable pastas, such as spinach- and tomato-containing pastas, consist mainly of wheat flour with only about 3 to 3.5 weight percent or less vegetable solids. Attempts to prepare wheat flour-based vegetable pastas with higher vegetable solids levels have generally been unsatisfactory.

Processes for the commercial manufacture of pasta, including vegetable pasta with low levels of vegetable solids, are well known. These processes involve mixing flour and water and, in the case of vegetable pasta, the appropriate vegetable solids, to form a paste. Typically the paste is shaped by forcing it through holes in an extruder die at high pressure and elevated temperature to form extrudates of the desired cross-sectional shape. The extrudates may, if desired, be cut to desired lengths. The extrudates are usually dried to a moisture content of generally less than about 14 weight percent.

The drying process in a conventional pasta manufacturing process is lengthy. The extrudates as they leave the extruder generally have a moisture content of about 28 weight percent or higher. For shelf-stable pasta, the moisture content of the pasta must generally be reduced to below about 14 weight percent. To accomplish this, conventional long and short pasta goods are generally dried to a moisture content of about 10 to 13 weight percent under normal drying conditions using temperature in the range of about 40°C to about 60°C with maximum drying times of about 10 hours for short pasta goods (i.e., elbow macaroni, elbow spaghetti, shells, mafalda, and the like) and about 20 hours for long pasta goods (i.e., spaghetti, fettuccine, vermicelli, and the like). Under high temperature drying conditions in the range of about 60°C to about 80°C, short pasta goods are dried for a maximum of about 5 hours and long pasta goods are dried for a maximum of about 10 hours. For ultra high temperature drying conditions in the range of about 80°C to about 140°C, short pasta goods are dried for a maximum of about 2 hours and long pasta goods are dried for a maximum of 5 hours. In most cases, the only process parameters controlled are the temperature, the relative humidity of the drying air and the drying time. In order to avoid checks, cracks, and like defects in the pasta, the conventional drying process is a relatively slow and time consuming, often requiring up to about 36 hours for long goods or 12 hours for short goods, for the pasta to reach the desired moisture content of less than 14 weight percent. During much of the drying process, the pasta is subjected to elevated temperatures which, if vegetable solids are present, adversely affect the color, flavor, texture and nutritional value of the finished pasta product.

Incorporation of flavoring and/or coloring agents, such as spinach or tomato solids, at levels up to about 3 weight percent can sometimes result in a pasta product with a starchy or gummy texture. Moreover, such vegetable pastas generally do not retain their color upon shelf aging or when cooked for eating. Better color can be obtained by increasing the level of vegetable solids in the pasta accompanied by properly controlled processing conditions. Attempts to increase the vegetable solids content above about 3.5 weight percent in dried, shelf-stable pasta have, however, generally resulted in products which lack integrity and with a tendency to fall apart during or after cooking. Such pasta also does not have desirable texture properties and generally, the overall quality is unacceptable. Thus, commercially available dried vegetable pasta generally has about 3 to 3.5 weight percent or less vegetable solids and tends to change in color and flavor during processing, storage and upon cooking.

Some attempts have been made to preserve or enhance the color in dried vegetable pasta. For example, U.S. Patent 4,840,808 discloses preparing vegetable pasta containing about 3 weight percent chlorophyll-containing vegetable solids and cations selected from the group consisting of magnesium, zinc, copper, calcium, and aluminum in orcer to enhance and preserve the color. The vegetable powders are subjected to an alkaline treatment prior to addition to the pasta dough in order to hydrolyze the chlorophyll ester groups and stabilize the chlorophyll pigment. U.S. Patent 4,517,215 discloses the use of hydrocolloids such as sodium or potassium alginate, at about 0.25 to 3 weight percent, and propylene glycol alginates, also at about 0.25 to 3 weight percent, to prepare vegetable pastas where the main ingredient is a seed or tuberous vegetable such as corn, potato, beans, and peas. Such vegetable pastas do not contain significant amounts of wheat-type flour. European Patent Publication 0,518,097A1 discloses that the color stability of vegetable pasta can be enhanced by subjecting the fresh pasta to saturated steam at 70 to 80°C followed by drying at temperatures below 60°C and a relative humidity of about 75 percent to a final moisture content of about 11 percent.

As indicated, the amount of vegetable solids in conventional dried wheat-based pasta has generally been limited to about 3 to 3.5 weight percent or less. Such vegetable pastas tend to loose color and flavor during the drying process, upon storage and especially upon cooking. For example, green or chlorophyll-containing vegetable pastas, e.g., spinach pastas tend to turn brown; and the reddish color in tomato pasta tends to fade over time. Moreover, even if the color remains strong in the dried pasta, there is generally a substantial loss of color upon cooking. A general reduction in both flavor and nutritional values is also observed with conventional vegetable pastas upon storage. The inability to incorporate higher levels of vegetable solids into dried pasta and to maintain color and flavor, has also generally limited the types of vegetables that could be utilized to those with very intense coloration or pigmentation such as spinach or tomato. In general, flavor retention has not been a primary concern in commercial vegetable pasta products.

The inability to provide a vegetable pasta with good texture, flavor, color and nutritional value as well as good storage stability has limited the use of vegetable pasta. Fresh vegetable pasta exhibits a very limited shelf life because of its tendency to undergo chemical changes, including flavor and color degradation.

It would be desirable, therefore, to provide a method by which dried vegetable pasta could be prepared with higher levels of vegetable solids than is currently commercially available. It would also be desirable to provide a dried vegetable pasta with high levels of vegetable solids which has good color, texture, structural integrity, and vegetable flavor. It would also be desirable to provide a dried vegetable pasta with high levels of vegetable solids which retains its color, texture, integrity, and vegetable flavor upon cooking. It would also be desirable to provide a dried vegetable pasta with high levels of vegetable solids which is more visually appealing, i.e., more colorful, in both the dried and cooked state and which is more flavorful and nutritious than conventional vegetable pasta. It would also be desirable to provide dried vegetable pasta with enhanced color and color stability without the need to add color stabilizers, enhancers, or artificial coloring to the product. It would also be desirable to provide a dried vegetable pasta with improved storage stability. The present invention provides such processes and such dried vegetable pastas.

## SUMMARY OF THE INVENTION

This invention relates to a method by which dried vegetable pasta having high levels of vegetable solids can be prepared using conventional pasta making equipment. The vegetable pasta produced by this invention has improved color, texture, structural integrity, and flavor characteristics, in both the uncooked or dried state and the cooked state, as compared with dried vegetable pastas currently available which contain no more than about 3 to 3.5 percent by weight vegetable solids.

Vegetable pastas are provided which contain between about 4 to about 15 weight percent vegetable solids, preferably between about 6 and about 15 weight percent vegetable solids, and most preferably between about 6 to about 9 weight percent vegetable solids. The vegetable pastas of this invention are prepared by first forming a homogenous aqueous paste of flour and vegetable solids containing about 27 to about 33 weight percent water. The flour typically has an average minimum protein content of greater than about 12 weight percent and preferably in the range of about 12 to 13.5 weight percent. The homogenous paste is then extruded to form pasta-shaped extrudates. For purposes of this invention, the terms "pasta-shaped extrudates" or "extrudates" are intended to include both three-dimensional shapes formed with conventional extrusion techniques and dies of appropriate shape as well as thin sheets formed using conventional roller-type pasta makers and strips or other shapes cut from such thin sheets. The extrudates are dried under high temperature and low relative humidity conditions. By carefully controlling both the temperature and humidity during drying, a vegetable pasta is obtained which has, both before and after cooking, good color, texture, integrity, and vegetable flavor.

The dried vegetable pastas of this invention have a moisture content of about 11.0 to about 13.0 weight percent and a vegetable solids content of about 4 to about 15 weight percent. For purposes of this invention, "dried pasta" or "dried vegetable pasta" is pasta having a moisture content of less than about 12.5 weight percent and preferably less than about 12 weight percent. Vegetables suitable for incorporation into vegetable pastas prepared using the process of this invention include, but are not limited to, beets, broccoli, carrots, celery, corn, green peppers, spinach, and tomatoes. Other vegetables may, if desired, also be employed. If desired, mixtures of vegetable solids derived from different vegetables can be used. It is also contemplated that the vegetables used may impart color without flavor and vice versa. The vegetable pastas prepared by the process of this invention offer excellent storage stability with minimal loss of color, texture, and flavor and excellent retention of color, texture, and flavor upon processing and subsequent cooking.

One object of the present invention is to provide a method of preparing vegetable pasta containing about 4 to about 15 weight percent vegetable solids, said method comprising

(1) blending flour, vegetable solids, and water to form a homogenous paste with a water content of about 28 to about 33 weight percent, wherein the flour has a minimum average protein content between about 12 to about 13.5 weight percent;

(2) extruding the homogenous paste to form pasta-shaped extrudates; and

(3) drying the pasta-shaped extrudates under high temperature and low relative humidity conditions whereby a vegetable pasta is obtained with a moisture content of about 11 to about 13 weight percent and vegetable solids content of about 4 to about 15 weight percent, wherein the vegetable pasta has, after drying and cooking, good color, texture, integrity, and vegetable flavor.

Another object of the present invention is to provide a vegetable pasta containing about 4 to about 15 weight percent vegetable solids prepared by a process comprising

(1) blending flour, vegetable solids, and water to form a homogenous paste with a water content of about 28 to about 33 weight percent, wherein the flour has an average protein content between about 12 to about 13.5 weight percent and wherein the vegetable solids are derived from a vegetable selected from the group consisting of beet, broccoli, carrot, celery, corn, green pepper, spinach, and tomato;

(2) extruding the homogenous paste to form pasta-shaped extrudates; and

(3) drying the pasta-shaped extrudates under high temperature and low relative humidity conditions whereby a vegetable pasta is obtained with a moisture content of about 11 to about 13 weight percent and vegetable solids content of about 4 to about 15 weight percent, wherein the vegetable pasta has, after processing and subsequent cooking, good color, texture, integrity, and vegetable flavor.

Still another object of this invention is to provide a method of preparing a thin-walled vegetable pasta containing about 4 to about 15 weight percent vegetable solids, said method comprising

(1) blending flour, vegetable solids, and water to form a homogenous paste with a water content of about 28 to about 33 weight percent, wherein the flour is a blend of about 0 to about 100 weight percent durum flour, about 0 to about 100 weight percent semolina flour, and about 0 to about 100 weight percent hard red spring flour and has a minimum average protein content between about 12 to about 13.5 weight percent and wherein the vegetable solids are derived from a vegetable selected from the group consisting of beet, broccoli, carrot, celery, corn, green pepper, spinach, and tomato;

(2) extruding the homogeneous paste to form thin-walled, pasta-shaped extrudates; and

(3) drying the thin-walled, pasta-shaped extrudates under high temperature and low relative humidity conditions, wherein

(a) the thin-walled, pasta-shaped extrudates are first dried at a temperature of about 65 to about 85°C and a relative humidity of about 25 to about 60 percent for a time sufficient to form a first partially-dried, thin-walled vegetable pasta with a moisture content of less than about 27 weight percent,

(b) the first partially-dried, thin-walled vegetable pasta is then dried at a temperature of about 75 to about 115°C and a relative humidity of about 26 to about 60 percent for a time sufficient to form a second partially-dried, thin-walled vegetable pasta with a moisture content of less than about 19.0 weight percent, and

(c) the second partially-dried, thin-walled vegetable pasta is dried at a temperature of about 70 to about 98°C and a relative humidity of about 35 to about 60 percent for a time sufficient to form a thin-walled vegetable pasta with a moisture content of about 11 to about 13 weight percent and vegetable solids content of about 4 to about 15 weight percent, wherein the thin-walled vegetable pasta has, after processing and subsequent cooking, good color, texture, integrity, and vegetable flavor.

These and other objects and advantages of the present invention will become apparent through the following description of the preferred embodiments of the invention.

## DESCRIPTION OF THE PREFERRED EMBODIMENTS

The present invention relates to a method of producing vegetable pasta with high levels of vegetable solids and to such vegetable pasta. Generally, the amount of vegetable solids is in the range of about 4 to about 15 weight percent of the dried pasta containing between about 11 to about 13 weight percent water. Preferably the vegetable solids are between about 6 to about 9 weight percent of the dried pasta. Typical vegetables suitable for incorporation into the pasta of this invention include beet, broccoli, carrot, celery, corn, green pepper, spinach, and tomato; but, as indicated, other vegetables may be utilized if desired.

In the first step of the present process, flour, vegetable solids, and water are blended together to form a homogenous mixture or paste with a moisture content of about 28 to about 33 weight percent. Preferably the moisture content of the paste is about 29 to about 32 weight percent. Conventional pasta mixers can be used for this blending step. The paste should be homogenous in order to produce a consistent and uniform pasta product.

High quality, wheat-based flours with mixograph values abcve 6 and a falling number targeted at about 400 (at least 350 minimum) are preferred in the practice of this invention. Mixograph values are a measure of gluten strength. Values of about 1 to 3 correspond to weak gluten and about 5 to 8 correspond to strong gluten.

The falling number correlates with alpha amylase activity and is a cood indicator of sprout damage. High alpha amylase activity in pasta products increases cooking losses. Higher amounts of reducing sugars in the raw flours and in the final product will result in softer textural characteristics in the cooked product. The flour should be of the glutinous type and have a minimum average protein content of about 12 to about 13.5 weight percent and preferably a minimum average protein content of about 13 to about 13.5 weight percent. Preferred wheat-based flours comprise 100 percent durum flours, 100 percent semolina flours, blends of about 50 to about 100 parts by weight durum flour and 0 to about 50 parts by weight hard red spring flour, and blends of about 50 to about 100 parts by weight semolina flour and 0 to about 50 parts by weight hard red spring flour. Limited amounts of proteinaceous materials such as egg albumin or soy isolates can be incorporated into the blend to modify textural properties if desired. Especially preferred wheat-based flours include 100 percent durum flours, 100 percent semolina flours, blends of about 50 to 100 weight percent durum flour and 0 to about 50 weight percent hard red spring flour, and blends of about 50 to 100 weight percent semolina flour and 0 to about 50 weight percent hard red spring flour, wherein the flour or flour blend has a minimum average protein content between about 13 to about 13.5 weight percent. Generally flours having a granulation size such that about 98 percent minimum pass through a U.S. standard No. 70 sieve (98% <212μm) are acceptable.

Sufficient vegetable solids and water are added to, and blended with, the flour using conventional pasta-making equipment or mixers to produce a paste of the desired water and vegetable solids content. The water content of the paste should be adjusted to allow for the formation of suitable extrudates which will retain the desired shape until that shape is set or hardened in the initial portion of the drying process. Generally, water levels in the range of about 28 to about 33 weight percent are acceptable. The vegetable solids may be in the form of a powder or an aqueous slurry. When using an aqueous slurry, a portion of the required water to form the homogenous paste will come form the aqueous slurry medium. The amount of vegetable solids added should be adjusted so that the final dried pasta has a vegetable solids content in the range of about 4 to about 15 weight percent based on the combined weight of the flour and vegetable solids.

The vegetable solids can be prepared from the appropriate vegetables using conventional techniques. For example, vegetable solids are preferably prepared by spray drying slurries of the vegetable materials. For the cases of tomato and beet powders, which are characterized by a thermoplastic behavior due to their high sugar content, the use of powders produced by spray drying in tall cooling towers is preferred. Such a process would ensure good quality in the vegetable powders from the point of view of color, flavor and nutrient retention. Vegetable powders obtained by air drying, followed by grinding are acceptable, depending on color and flavor characteristics. Although vegetable powders obtained by freeze drying are excellent in quality, their high cost may prevent their utilization in commercial applications. Powders containing flow conditioners or glidants may facilitate transport (feeding) operations during the pasta making operations. Glidants such as precipitated silicas appear to have a slightly detrimental effect on textural properties due to their interaction with the protein fraction of the flour. Incorporation of encapsulating materials with controlled water solubility such as proteins, native or modified starches or hydrocolloids, during the spray drying operation, will help in retaining color, flavor and nutrients during drying of the vegetable slurries, during the pasta making operations and during cooking. Suitable vegetables include beets, broccoli, carrots, celery, corn, green peppers, spinach, and tomatoes. Green pepper, broccoli and tomato are especially preferred. Generally vegetable solids having an average particle size in the range of about 5 percent maximum on U.S. standard No. 60 screen (not more than 5% >250μm) to about a minimum of about 95 through a U.S. standard No. 14 screen (about 95% <1.40 mm) are acceptable. As noted, the vegetable solids may be added as a powder or as an aqueous slurry. Introduction of the vegetable solids as a powder may facilitate metering of the various streams in conventional pasta manufacturing installations and allow easier stockpiling of the vegetable product for use in the pasta manufacturing process. On the other hand, the use of aqueous slurries will generally allow the avoidance of exposure of the vegetable solids to the thermal treatment required to dry the vegetable solids and may result in a product with better flavor, color and nutritional value. The use of a slurry may also reduce the overall manufacturing cost since the dehydration process for preparing the vegetable solids can be eliminated. When using vegetable solids above about 6 percent, slurries may be too viscous for pumping or may prevent proper flour hydration. In such cases, remaining vegetable solids need to be introduced as powders.

Other additives or ingredients may also, if desired, be added to the paste. Such additives include pH modifiers such as food-grade hydrochloric acid, sodium, hydroxide, and the like; salt or other spices; disodium phosphate; glyceryl monostearate; egg white powder; wheat gluten; whey solids; soy protein isolates; and encapsulated vitamins. Such additives can be used to enhance the flavor or nutritional value of the pasta or to provide improved physical properties for the paste such as reduced viscosity or improved lubrication to assist in the extrusion process. Generally, additives, such as extrusion aids, pH modifiers, and encapsulated vitamins, will be present at relatively low levels, i.e., less than about 2 weight percent and preferably less than about 1.5 weight percent, based on the total weight of the dried pasta. Protein-containing materials such as soy protein isolates and egg whites may be added up to a level of about 10 percent.

For chlorophyll-containing vegetables such as broccoli, celery, green pepper, and spinach, it may be desirable to adjust the pH of the homogenous paste to a value of about 5 to about 9 and preferably about 6 to about 8 prior to extrusion. For carotenoid-containing vegetables such as carrots and tomato and betalain-containing vegetables such as beets, a pH in the range of about 4 to about 7 pH units may be preferred. Paste containing vegetable solids outside these pH ranges may also be used; in other words, although it may be preferable to adjust the pH with specific vegetables, it is not necessary.

Once the homogenous paste is formed, the paste is extruded or otherwise shaped using conventional pasta making techniques. For example, the homogenous paste can be forced through the holes of an extruder die or can be pressed between rollers to obtained the desired shape. Extrudates formed using an extruder die can be cut to the desired length. Extrudates formed using rollers will be in the form of thin sheets which can then be cut into thin strips and to length before further processing. All conventional pasta shapes can be used in the practice of this invention including, for example, spaghetti, vermicelli, fettucini, linguine, ziti, elbow spaghetti, orqu, shell, elbow macaroni, rigatoni, macaroni, twist rings, mafalda, alphabets, lasagna, spirals, manicotti, angel hair, noodles, kid's shapes such as teddy bears and the like. Thin-wall extrudates or pasta shapes are, however, especially preferred since they generally require shorter drying times. For purposes of this invention, "thin-wall" means a wall thickness of less than about 0.037 inches (about 0.94 mm), preferably in the range of about 0.014 inches to about 0.031 inches (about 0.36 mm to about 0.79 mm).

Once formed, the pasta-shaped extrudates of this invention are dried under controlled conditions using high temperature and low relative humidity to produce a dried pasta with a moisture content of about 11 to about 13 weight percent and preferably about 12 to about 12.5 weight percent and which has good color, texture, and integrity. For purposes of this invention, "low relative humidity" is intended to mean a relative humidity in the range of about 25 to about 60 percent and preferably in the range of about 25 to about 50 percent. It is important that the extrudates to be dried have an initial moisture content of at least 28 weight percent and preferably about 29 to about 33 weight percent. If the initial moisture content is too low, _i.e._, less than 28 weight percent, or if the relative humidity is too low, _i.e._, less than about 25 percent, it may be difficult to avoid significant structural damage to the final product during drying. By controlling the drying conditions, a good quality pasta can be produced without significant deterioration or destruction of the color, flavor, and nutrients associated with the vegetable used to prepare the pasta. The drying profiles used in this invention are designed to allow for controlled and rapid removal of the water form the pasta with minimal structural stresses to prevent or minimize cracking, checking, splitting, and blistering of the pasta shapes. The present drying process generally limits the duration of the exposure of the vegetable pasta to elevated temperature while still providing a relatively crack-, check-, split-, blister-, and structural stress-free pasta product. It is generally preferred that the total time the vegetable pasta be exposed to temperatures in excess of about 75°C during the drying process is less than about 4.5 hours and more preferably less than about 3.5 hours. As noted above, thin-walled pasta is especially preferred for the practice of this invention since such pasta can generally be dried significantly faster than thick-walled pasta.

One preferred drying profile involves (a) drying the pasta-shaped extrudates at a temperature of about 65 to about 85°C and a relative humidity of about 25 to about 60 percent for a time sufficient to form a partially-dried vegetable pasta with a moisture content of less than about 27 weight percent, and (b) drying the partially-dried vegetable pasta at a temperature of about 75 to about 115°C and a relative humidity of about 26 to about 60 percent for a time sufficient to dry the vegetable pasta. Another preferred drying profile involves (a) drying the pasta-shaped at a temperature of about 65 to about 85°C and a relative humidity of about 25 to about 60 percent for a time sufficient to form a first partially-dried vegetable pasta with a moisture content of less than about 27 weight percent, (b) drying the first partially-dried vegetable pasta at a temperature of about 75 to about 115°C and a relative humidity of about 26 to about 60 percent for a time sufficient to form a second partially-dried vegetable pasta with a moisture content of less than about 19.0 weight percent, and (c) drying the second partially-dried vegetable pasta at a temperature of about 70 to about 98°C and a relative humidity of about 35 to about 60 percent for a time sufficient to dry the vegetable pasta. Drying profiles having more than three discrete steps can also be used and may, in some cases, be preferred. A cooling section with temperatures of about 25-30°C can be used to temper the product.

Preferably the drying regime involves first drying at a temperature of about 60 to about 70°C for a relatively short time, _i.e._, about 5 to about 30 minutes, to set the shape of the extrudates, followed by drying at a higher temperature of about 70 to about 80°C for about 15 to about 60 minutes, followed by drying at a lower temperature of about 65 to about 75°C for about 60 to about 215 minutes, and finally drying at about ambient temperature for about 30 to about 120 minutes, while maintaining the relative humidity throughout the drying process in the range of about 20 to about 60 percent and preferably in the range of about 25 to about 50 percent. For example, the drying profiles included in the following Tables I, II, and III have been found to be satisfactory for a thin-walled pasta containing about 6 weight percent vegetable solids. Additionally, based on both pilot plant and commercial operations, a preferred drying profile is shown in Table III.

TABLE I:

| Typical Drying Profile | | | |
|---|---|---|---|
| Segment | Time (min.) | Temperature (°C) | Relative Humidity (%) |
| 1 | 15 | 80-85 | 25-30 |
| 2 | 30 | 110-120 | 25-30 |
| 3 | 45 | 95-100 | 30-40 |
| 4 | 60 | 85-90 | 25-35 |
| 5 | 90 | 25-30 | 25-30 |

TABLE II:

| Typical Drying Profile | | | |
|---|---|---|---|
| Segment | Time (min.) | Temperature (°C) | Relative Humidity (%) |
| 1 | 10 | 60-70 | 50-70 |
| 2 | 35 | 70-80 | 40-60 |
| 3 | 215 | 65-75 | 40-60 |
| 4 | 35 | 30-40 | 70-80 |
| 5 | 45 | 25-30 | 45-50 |

TABLE III:   A Preferred Drying Profile

| Segment | Time (min.) | Temperature (°C) | Relative Humidity (%) |
|---|---|---|---|
| 1 | 1 | 25 | 50 |
| 2 | 9 | 74 | 60 |
| 3 | 35 | 68 | 60 |
| 4 | 215 | 74 | 51 |
| 5 | 35 | 36 | 80 |
| 6 | 45 | 25 | 50 |

Of course, the drying profiles included in Tables I-III are intended only as examples of suitable drying profiles. Many other time, temperature, and relative humidity combinations can be used so long the pasta is exposed to high temperatures of about 70° to about 115°C with a residence time depending on air temperature during the early portion of the drying cycle, the relative humidity remains about 40 to about 60 percent during the drying cycle, the final moisture content of the dried pasta is in the range of about 11 to about 13 weight percent, and the resulting dried pasta has good color, texture, integrity, and flavor. Moreover, as those skilled in the art will realize, preferred drying profiles within these ranges can vary with other operational parameters including, for example, scale of the manufacturing facility and actual equipment used. Instead of having discrete temperature steps, i.e., step functions, as suggested in the Tables above, the temperature and relative humidity can also be varied in a more "continuous" manner. For example, a continuous profile similar to the step profile in Table I might consist of slowly and continuously raising the temperature from about 80°C to about 120°C over about 15 minutes, holding at about 120°C for about 30 minutes, slowly and continuously lowering the temperature to about 90°C over about 60 minutes, and then slowly and continuously lowering the temperature to ambient temperature (about 25°C) over about 90 minutes.

As noted above, the process of this invention can be implemented using conventional pasta making equipment, including convention pasta drying ovens. The drying ovens must, of course, be capable of controlling the temperature and relative humidity to which the pasta shapes are exposed as a function of time. Generally, forced air drying ovens with discrete or separate drying zones and separate temperature and humidity controls for each drying zone are preferred. Separate drying zones allow the temperature and relative humidity to be easily varied and controlled as the pasta passes through the drying oven. Continuous, multi-conveyor belt type dryers where the pasta shapes drop from one belt to another are especially suited for the practice of this invention; the temperature and relative humidity can be controlled such that the pasta on each belt can be exposed to the desired temperature and humidity conditions. Separate drying ovens connected in series, where each oven has its own separate temperature and relative humidity controller, are generally preferred. Preferably the drying oven or ovens are forced air types which allows for better control of the humidity near the surface of the pasta shapes. Especially in the early stages of the drying process, water vapor removed from the pasta can raise the relative humidity near the pasta surface to levels higher than desired, thereby slowing down the drying process and resulting in a less desirable product. By removing this potential "layer" of high humidity near the pasta surface, the humidity can be controlled with the ranges desired in the present process. High capacity lines (in the range of 6000 lbs/hr [2721.55 kg/hr] or above) may result in problems in controlling the percentage of relative humidity in the predryer. Accurate temperature and percent relative humidity must be controlled in the predryer to assure good quality in terms of color, flavor, nutrients and structural integrity.

The high vegetable content pastas of this invention have good color, texture, integrity, and vegetable flavor both before and after cooking. The pastas of this invention also have excellent storage stability. For example, vegetable pasta produced by this invention has a storage stability greater than six months if protected from light; the good color, texture, integrity, and vegetable flavor both before and after cooking is not significantly reduced upon such storage. Storage stability can be increased even further if, in addition to protection from light, the pasta is protected from oxygen by, for example, packaging in an inert atmosphere such as nitrogen, or from high relative humidities. Protective packaging to minimize light and oxygen contact will be preferred if storage is expected to be at high relative humidities and high temperatures.

The following examples are provided to illustrate the invention and not to limit the invention.

Example 1.

This example illustrates the manufacture of a vegetable pasta with various types of wheat flours using the process of this invention. Samples containing 6 weight percent tomato solids and made out with 100 percent durum, 100 percent hard red spring (HRS), or blends of the aforementioned flours were evaluated for process performance and product quality. The data relating to texture and color are provided in Table IV. No significant difference was observed in the process performance of the various mixes. Generally, samples prepared with 100 percent durum flours were superior in overall acceptability and had better color and texture. The other samples were, however, acceptable. Thus, the durum flours, probably because of the type of proteins they contain, are generally preferred for the manufacturing of vegetable pasta.

TABLE IV:

| Variation of Flour Type. | | | | | |
|---|---|---|---|---|---|
| Flour | Texture | | Color | | |
| | Work (lb-cm/g) | Break Strength (lb/g) | L | a | b |
| durum | 3.93 | 72 | 32.31 | 16.55 | 28.42 |
| 50/50 durum/HRS | 3.42 | 62 | 29.33 | 15.40 | 32.89 |
| HRS | 3.46 | 65 | 24.49 | 12.90 | 19.50 |

Texture measurements in the above Table were determined using a FTC Texture Test System. Color parameters were determined with a Minolta Colorimeter: L is a measurement of the white-gray color component (lightness); a is a measurement of the yellow-blue component (chromaticity); and b is a measurement of the red-green component (chromaticity).

### Example 2.

This example illustrates the use of high vegetable solids in the successful manufacture of vegetable pasta. The process performance and final quality of samples prepared with various levels of tomato solids ranging from 3 to 15 weight percent (dry basis) and 100 percent durum flour were evaluated. Variation in final moisture content upon extrusion was observed in samples as a function of the level of solids added. Results, as indicated in Table V below, indicate that upon an increase in tomato solids concentration, the textural properties declined in acceptability, while color and flavor increased in intensity. All samples were found to be acceptable, however. A maximum in desired flavor intensity was found to be around 9 to 12 weight percent vegetable solids for products undergoing conventional cooking. Much better flavor retention was observed in products that were microwaved for an equivalent degree of cooking.

TABLE V:

| Variation of Vegetable Content. | | | | | |
|---|---|---|---|---|---|
| Tomato Solids (%) | Texture | | Color | | |
| | Work (lb-cm/g) | Break Strength (lb/g) | L | a | b |
| 0 | 3.93 | 72 | 32.31 | 16.55 | 28.42 |
| 6 | 3.43 | 63 | 35.41 | 17.83 | 28.25 |
| 12 | 3.19 | 57 | 26.04 | 15.82 | 18.89 |
| 15 | 2.91 | 54 | 27.92 | 16.97 | 19.28 |

Color parameters were determined with a Minolta Colorimeter: L is a measurement of the white-gray color component (lightness); a is a measurement of the yellow-blue component (chromaticity); and b is a measurement of the red-green component (chromaticity). Texture was determined using a FTC Texture Test System.

### Example 3.

This example illustrates that pH adjustment did not significantly modify the green color of vegetable pasta containing broccoli. The pH of the pasta has been reported to have a significant effect on chlorophyll stability. Using broccoli pasta with pH in the range of from 5.0 to 9.0, it was found that the water and temperature parameters during the drying cycle were more important, as measured by product quality, than the pH. Generally, however, a brighter green color was obtained at pH 7.8. The pH had little effect on textural properties. As far as mouthfeel and overall acceptability, pH had little effect; all samples were acceptable.

TABLE VI:

| Variation of pH. | | | | | |
|---|---|---|---|---|---|
| Blend | pH | Texture | Color | | |
| | | Break Strength (lb/g) | L | a | b |
| durum | - | 44.44 | 32.31 | 16.55 | 28.42 |
| durum + 6% broccoli | 5.0 | 48.25 | 26.87 | -3.37 | 19.60 |
| durum + 6% broccoli | 7.8 | 49.28 | 30.32 | -3.54 | 20.67 |
| durum + 6% broccoli | 9.0 | 49.65 | 28.25 | -3.10 | 19.57 |

Texture measurements in the above Table were determined using an Instron Universal Machine. Color parameters were determined with a Minolta Colorimeter: L is a measurement of the white-gray color component (lightness); a is a measurement of the yellow-blue component (chromaticity); and b is a measurement of the red-green component (chromaticity).

Example 4.

An experimental design was conducted in a pilot plant to evaluate the influence of the several experimental variables on tomato pasta quality. The experimental design used was the Taguchi design as described in "Introduction to Quality Engineering" (America Supplier Institute, Dearborn, Michigan; Version 2.2; 1992). This experimental design allowed the evaluation of eight experimental variables and three levels for each variable. The experimental variables and their levels are shown in Table VII.

TABLE VII:

| Experimental Variables. | | | |
| --- | --- | --- | --- |
| Experimental Variables | Experimental Value | | |
| | Level 1 | Level 2 | Level 3 |
| Addition of Vegetable Solids | Powder | Slurry | -- |
| Solids Added (%) | 3.0 | 6.0 | 9.0 |
| Flour Type (% durum/% HRS) | 100/0 | 75/25 | 50/50 |
| Water Setting | 2.8 | 3.2 | 3.6 |
| Peak Dryer Temp. (Dry Bulb, °C) | 72 | 86 | 100 |
| Relative Humidity (%) at Peak Temp. | 26 | 30 | 34 |
| Dry Blend Time (minutes) | 15 | 45 | 120 |
| pH | 5.0 | 6.0 | 7.0 |

Dependent variables measured included texture (as measured on an Instron Universal Machine), color (as measured with a Hunter Colorimeter), and amount of solids lost upon cooking.

The results of the experimental design suggest, at least within the ranges of independent variable examined, that:

(1) Process water level is significant in controlling the textural properties of the final product. Moisture level of the pasta prior to drying is also important relative to the structural stresses in the dry pasta. The form in which the vegetable solids are added (i.e., powder or slurry) and the dry bulb temperature of the air influence the texture of the cooked product to a lesser degree.

(2) Vegetable solids level, type of flour, and water levels used in the manufacturing of the pasta are important variables relative to the amount of solids lost during cooking. Generally, better results are obtained when 100 percent durum flour is utilized.

(3) Important variables which influence color are level of vegetable solids, form in which the vegetable solids are added (i.e., powder or slurry), and water setting.

Based on results of the experimental design, a "paper champion" -- i.e., the values of the variables providing the best overall product within the criteria of the Taguchi design -- was determined. The values for each variable for the "paper champion" are provided in the following Table. It is expected that a product manufactured using these composition and process parameters would have a good to excellent quality profile. As those skilled in the art will realize, the optimum values for any of these parameters may depend, at least to some extent, on the exact equipment used and the scale of the manufacturing operation.

TABLE VIII:

| Overall Results -- "Paper Champion". | |
|---|---|
| Experimental Variables | "Paper Champion" |
| Addition of Vegetable Solids | Powder |
| Solids Added (%) | 6.0 |
| Flour Type (% durum/% HRS) | 75/25 |
| Water Setting | high |
| Peak Dryer Temp. (Dry Bulb, °C) | 100 |
| Relative Humidity (%) at Peak Temp. | 34 |
| Dry Blend Time (minutes) | 120 |
| pH | 7.0 |

Example 5.

Under controlled manufacturing conditions, initial moisture content as well as humidity and temperature in the predryers can affect the color of chlorophyll-containing vegetable pastas prepared using durum flours, semolina flours, hard red spring flours, and blends thereof. Accurate control of the temperature and humidity conditions in the predryer appears to be influential factors on product quality, particularly color. Conditions in the final dryer had reduced influence on color retention, due to the lower moisture content of the product. Since humidity control is not normally effected in the shaker, initial moisture content of the pasta can be more important during this operation. Final moisture content of the material coming out of the shaker has a significant effect on color retention in the final product, since it determines the reactivity of the material entering the predryer. Plant trials conducted under a variety of process conditions for the drying cycle suggest, particularly for the case of chlorophyll-containing products, that the combination temperature/relative humidity is important for color retention during drying. Chlorophyll degradation and conversion to brown pigments (pheophytins) occurs at high moisture contents and high temperatures. Thus, drying profiles that would allow the rapid dehydration of the pasta without creating significant structural stress are expected, based on this invention, to result in a good quality product without the addition of additives to prevent such product defects.

Example 6.

Experiments conducted on pasta of different shapes (i.e., elbows, elbow spaghetti, fettuccine, mafalda, kid's shapes such as Christmas shapes, etc.) and thicknesses (conventional and thin wall), generally indicated that better color retention was obtained with thin-walled pastas independent of the actual shape. Conventional thickness pasta, however, gave acceptable results. Color and flavor retention upon cooking was also improved when using thin-walled products, probably because of the decreased time required for cooking. Generally, better cooked properties (e.g., color and flavor) were obtained when the pastas were microwaved, as opposed to conventional cooking.

## Claims

1. A method of preparing vegetable pasta containing about 4 to about 15 weight percent vegetable solids, said method comprising
    (1) blending flour, vegetable solids, and water to form a homogeneous paste with a water content of about 28 to about 33 weight percent, wherein the flour has a minimum average protein content between about 12 to about 13.5 weight percent;
    (2) extruding the homogeneous paste to form pasta-shaped extrudates; and
    (3) drying the pasta-shaped extrudates under high temperature and low relative humidity conditions,

whereby a vegetable pasta is obtained with a moisture content of about 11 to about 13 weight percent and vegetable solids content of about 4 to about 15 weight percent, wherein the vegetable pasta has, after processing and subsequent cooking, good colour, texture, integrity, and vegetable flavor.

2. A method as defined in claim 1, wherein the drying step comprises
(a) drying the pasta-shaped extrudates at a temperature of about 65 to about 85°C and a relative humidity of about 25 to about 60 percent for a time sufficient to form a partially-dried vegetable pasta with a moisture content of less than about 27 weight percent, and
(b) drying the partially-dried vegetable pasta at a temperature of about 75 to about 115°C and a relative humidity of about 26 to about 60 percent for a time sufficient to dry the vegetable pasta.

3. A method as defined in claim 1, wherein the drying step comprises
(a) drying the pasta-shaped extrudate at a temperature of about 65 to about 85°C and a relative humidity of about 25 to about 60 percent for a time sufficient to form a first partially-dried vegetable pasta with a moisture content of less than about 27 weight percent,
(b) drying the first partially-dried vegetable pasta at a temperature of about 75 to about 115°C and a relative humidity of about 26 to about 60 percent for a time sufficient to form a second partially-dried vegetable pasta with a moisture content of less than about 19.0 weight percent, and
(c) drying the second partially-dried vegetable pasta at a temperature of about 70 to about 98°C and a relative humidity of about 35 to about 60 percent for a time sufficient to form the vegetable pasta.

4. A method as define in any one of claims 1 to 3, wherein the vegetable solids are derived from a vegetable selected from beet, broccoli, carrot, celery, corn, green pepper, spinach, and tomato.

5. A method as defined in any one of claims 1 to 4, wherein the vegetable pasta is a thin-walled pasta.

6. A method as defined in any one of claims 1 to 5, wherein the flour comprises a blend of 0 to about 100 percent semolina flour, and 0 to about 100 percent by weight hard red spring flour.

7. A method as defined in claim 6, wherein the flour comprises a blend of about 50 to about 100 percent by weight durum flour and 0 to about 50 percent by weight hard red spring flour or a blend of 50 to about 100 percent by weight semolina flour and 0 to about 50 percent by weight hard red spring flour.

8. A method as defined in any one of claims 1 to 7, wherein the vegetable solids in step (1) are in a powder form.

9. A method as defined in any one of claims 1 to 7, wherein the vegetable solids in step (1) are in an aqueous slurry form.

10. A method as defined in any one of claims 1 to 9, wherein the vegetable solids are derived from a vegetable selected from the group consisting of broccoli, celery, green pepper, and spinach and wherein the pH of the homogeneous paste is adjusted from about 5 to about 9.

11. A method as defined in claim 10, wherein the pH of the homogeneous paste is adjusted from about 6 to about 8.

12. A vegetable pasta made by a process according to any one of claims 1 to 11.

**European Patent Office**

## EUROPEAN SEARCH REPORT

Application Number

EP 94 30 5586

### DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| Y | EP-A-0 350 552 (BORDEN, INC.)<br>* claims 1,3,12-14,20 *<br>--- | 1-4 | A23L1/16 |
| Y | DATABASE WPI<br>Week 8533,<br>Derwent Publications Ltd., London, GB;<br>AN 85-200230<br>& JP-A-60 126 043 (SHOWA SANGYO KK) 5 July 1985<br>* abstract *<br>--- | 1-4 | |
| D,A | EP-A-0 518 097 (BARILLA G.E.R. FRATELLI-SOCIETA PER AZIONI)<br>--- | 1 | |
| A | US-A-3 992 554 (JON R. BLAKE; HAROLD E. MILLER)<br>* claim 1 *<br>----- | 1-12 | |
| | | | **TECHNICAL FIELDS SEARCHED (Int.Cl.6)**<br><br>A23L |

The present search report has been drawn up for all claims

| Place of search | Date of completion of the search | Examiner |
|---|---|---|
| BERLIN | 22 November 1994 | Caturla Vicente, V |

EPO FORM 1503 03.82 (P04C01)

13